# EUROPEAN PATENT APPLICATION

(11) **EP 2 166 447 A2**
(43) Date of publication of application: **24.03.2010**
(21) Application number: 09170816.4
(22) Date of filing: 21.09.2009
(51) Int. Cl.: G06F 3/06

(54) **Computer and method for connecting computer to network disk**

(30) Priority: 23.09.2008 TW 97136499
(71) Applicant: ASUSTeK Computer Inc., Peitou,Taipei (TW)
(72) Inventor: Wang, Chin-Yu, Taipei (TW); Liao, Heng-Yi, Taipei (TW)
(74) Representative: Becker Kurig Straus

(57) **Abstract**

A computer includes a BIOS and a communication system. The BIOS includes a disk access interface module and a ram disk. The disk access interface module accesses a remote disk, and the ram disk stores data retrieved from the remote disk. The communication system includes a storage medium having a preset format and a communication protocol layer module. The storage medium having the preset format has a network chip driver to allow the BIOS to call and connect to the network. Thus, the computer may communicate with the remote disk. The communication protocol layer module makes the computer communicate with the remote disk through the network chip driver.

## Description

### RELATED APPLICATIONS

This application claims priority to Taiwan Application Serial Number 97136499, filed September 23, 2008, which is herein incorporated by reference.

### BACKGROUND OF THE INVENTION

### Filed of the Invention

The invention relates to a basic input/output system (BIOS) and, more particularly, to a BIOS capable of being connected to a network.

### Description of the Related Art

A basic input/output system (BIOS) is an important interface between hardware and an operating system in a personal computer. The BIOS is the program recorded in a memory for controlling hardware components. If a computer does not have the BIOS, the hardware components are just parts without communication even they are assembled with one another. Only when the components communicate and coordinate with each other may they form the base of the whole system. The BIOS plays the role of a communicator and coordinator.

When the power is switched on, and before the operating system (such as DOS, Unix, or Windows) is entered, the first important work of the computer is to execute the BIOS codes. Thus, the BIOS makes the hardware components communicate with each other to form the base of the "system". The BIOS also checks if peripherals of the computer are in a normal condition. Furthermore, the BIOS initializes and tests the hardware to make sure that the hardware may operate normally. After the initialization setting and the testing process, the BIOS reads booting program in a hard disk to make the operating system which is software control the computer.

The BIOS is also an important interface between the operating system and the hardware in the computer. For example, a video graphics array (VGA) BIOS includes information such as control commands and a product logo. The information is recorded in a read only memory (ROM) or a flash chip directly by the VGA card manufacturer, and it plays the role of a communicator and coordinator between the operating system and the VGA card.

Generally, when the user installs an operating system which is not originally in the computer, when the operating system does not include a driver of certain hardware, or when the user updates or installs hardware, the operating system may inform the user to provide the driver of the hardware. However, generally, the user does not know where the driver is, and even the hardware manufacturer provides a floppy disk or compact disk having the driver, the user often loses the floppy disk or the compact disk or forgets to bring it, which may waste time in installing the system.

### BRIEF SUMMARY OF THE INVENTION

One aspect of the invention provides a computer which may be connected to a network to retrieve data in a BIOS mode and store the retrieved data in a ram disk without entering an operating system.

According to an embodiment of the invention, the computer includes a BIOS and a communication system. The BIOS includes a disk access interface module and a ram disk. The disk access interface module accesses the remote disk, and the ram disk stores data retrieved from the remote disk. The communication system includes a storage medium having a preset format and a communication protocol layer module. The storage medium having the preset format has a network chip driver to allow the BIOS to call and connect to the network. Thus, the computer may be connected to the remote disk. The communication protocol layer module makes the computer communicate with the remote disk via the network chip driver. The communication protocol layer module converts commands of the BIOS and transmitted data to a frame having an Internet protocol (IP).

Another aspect of the invention provides a method for connecting a computer to a network disk through a network. In the method, a network chip driver is stored in an outside storage medium having a preset format. The data stored in the outside storage medium having the preset format is accessible by the BIOS, and the BIOS may use the network chip driver stored in the outside storage medium having the preset format to control the communication system to connect to the network.

According to another embodiment of the invention, in the method for connecting a computer to the network disk, a storage medium having the preset format is accessed by the BIOS. The storage medium having the preset format has a network chip driver. Then, the network chip driver is executed to make the computer connected to a network. A communication protocol layer module is actuated to make the computer communicate with a remote disk via the network chip driver. The BIOS creates a ram disk to store the shortcut data retrieved from the remote disk.

According to the embodiments above, a user also may capture data by accessing the Internet via the BIOS, which increases the convenience.

### BRIEF DESCRIPTION OF THE DRAWINGS

FIG.1 is a block diagram showing the computer in an embodiment of the invention;
FIG. 2 is a schematic diagram showing the computer in another embodiment of the invention;
FIG. 3 is a schematic diagram showing the computer in still another embodiment of the invention; and
FIG. 4 is a block diagram showing the computer system in an embodiment of the invention.

### DETAILED DESCRIPTION OF THE EMBODIMENTS

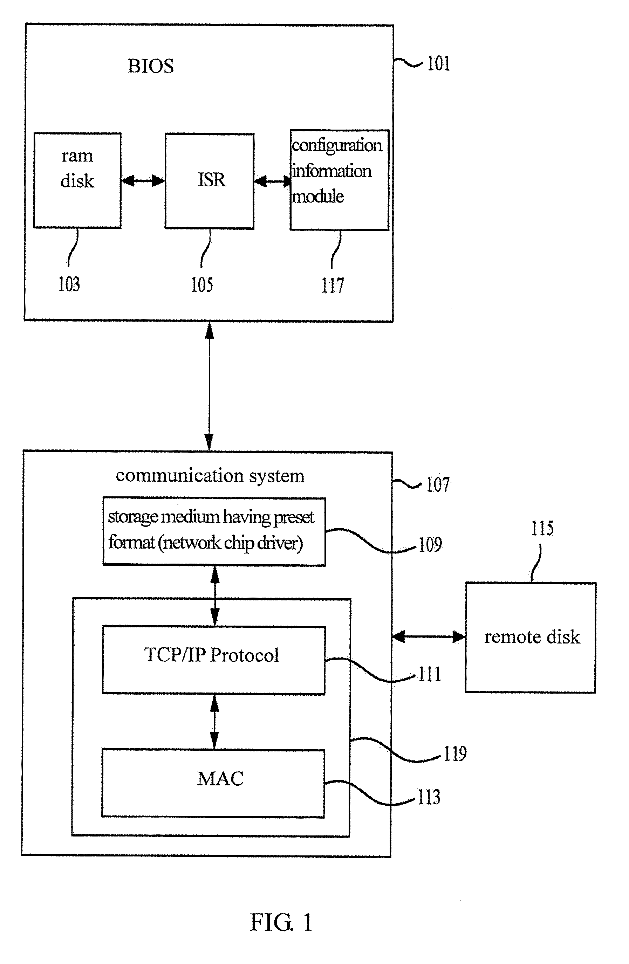

FIG.1 is a block diagram showing the computer in an embodiment of the invention. As shown in FIG. 1, the computer includes a BIOS 101 and a communication system 107. The BIOS 101 is connected to the network using the communication system 107 and retrieves data from a remote disk 115. In the computer of the embodiment, the BIOS 101 creates a ram disk 103 and accesses a network chip driver of the storage medium having a preset format 109. Then, the BIOS 101 may execute the network chip driver to establish a connection between the computer and the network. Afterwards, the BIOS 101 may actuate the communication protocol layer module 119 to make the computer communicate with the remote disk through the network chip driver and then stores a shortcut data (such as the menu name and the file names of the file system data) retrieved from the remote disk 115 to the ram disk 103. Besides the steps above, the BIOS 101 also may create a user interface module 201 to display the shortcut data on the user interface module 201, and then a file transmission protocol (FTP) module is actuated to download the driver corresponding to the shortcut data to the computer.

The BIOS 101 includes a disk access interface module, a ram disk 103 and a configuration information module 117. The connecting modes of the computer are different, and thus the configuration information module 117 may have different configuration information. For example, if an enterprise user uses the dynamic host configuration protocol (DHCP) connection, he or she does not need information specially and may drive a network chip to connect to the network. For a family asymmetric digital subscriber loop (ADSL) user, the configuration information module 117 may store a user account, a user password, data for dial-up connection or wireless connection, point-to-point protocol over Ethernet (PPPoE) and other information. Thus, a configuration information module 117 in the embodiment is not necessary. For example, in the computer using the DHCP connection, or in the setting of inputting a prompt to connect to the network, the configuration information module 117 is not necessary.

When the BIOS 101 is connected to the network, the BIOS 101 may use the disk access interface module to access the remote disk 115, and the ram disk 103 may store the data retrieved from the remote disk 115. In the embodiment, the disk access interface module may be an interrupt service routine (ISR) 105 (INT 13 interrupt service), and in other embodiments, for example, in the Linux system, different disk access interface modules may be used.

The file format of the remote disk 115 may be a file format accessible by the BIOS 101. Generally, all open source file systems are accessible, such as the operating systems used in FAT, FAT32 or Linux system. The NTFS file system also may be used in the embodiment if it is opened. The ram disk 103 stores the file retrieved from the remote disk 115.

The communication system 107 of the computer includes the storage medium having the preset format 109 and the communication protocol layer module 119. The storage medium having the preset format 109 has a file format callable by the BIOS 101. Generally, all the open source file systems such as the operating system in FAT, FAT32 or Linux system are callable. The NTFS file system also may be used in the embodiment if it is opened. The storage medium having the preset format 109 includes a network chip driver callable by the BIOS to connect to the network. The network chip driver may establish a connection between the computer connected and the network. For example, when the network adapter uses wired Ethernet, the network chip driver drives the network adapter and establishes the physical Ethernet connection. For example, if the wireless network is used, the network chip driver drives the network adapter and establishes the physical wireless connection. The storage medium having the preset format 109 further includes a network retrieving program for connecting to a preset webpage to retrieve programs. The communication protocol layer module 119 is controlled by the network chip driver, and it is used to convert the commands of the BIOS and the transmitted data to the frames having an Internet protocol (IP).

The communication protocol layer module 119 makes the computer communicate with remote disk through the network chip driver. For example, the computer may utilize the network chip driver to create a network physical layer such as the wired Ethernet connection. Then, the communication protocol layer module 119 creates the network transmission protocol and transmits the information to the remote disk. The communication protocol layer module 119 may include a MAC module 113 and a transmission control protocol/internet protocol (TCP/IP) module 111. A transmission control protocol/user data protocol (TCP/UDP) module also may be included in advanced communication.

In an embodiment, the communication protocol layer module 119 includes a file transmission protocol (FTP) module. When the user wants to download a driver, he or she may choose a driver (shortcut data) in the remote disk in the computer, and the driver may be transmitted to a local disk of the computer.

The communication protocol layer module 119 includes a TCP/IP protocol module 111 and a MAC module 113. The TCP/IP protocol module 111 converts commands of the BIOS 101 and transmitted data to packages. The packages have an Internet protocol (IP), and the MAC module 113 converts the packages to the frames to be transmitted through the network.

Under the configuration of the BIOS 101 and the communication system 107, the user may connect the computer to a preset webpage via the BIOS 101 and the communication system 107 to retrieve an operating system (such as Windows, Linux or Unix) and other drivers (such as the printer driver and the web camera driver). The retrieved operating system such as Windows, Linux and Unix and other drivers are stored in the ram disk 103.

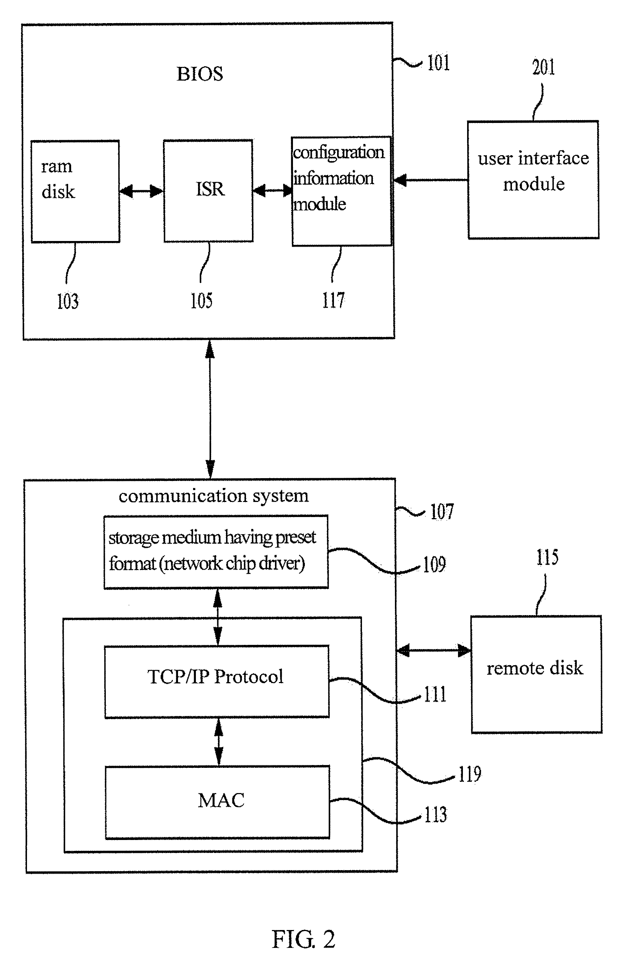

FIG. 2 is a schematic diagram showing the computer in another embodiment of the invention. As shown in FIG. 2, the computer is similar with the computer in FIG. 1, but the computer in the embodiment has an additional user interface module 201. The user interface module 201 provides a menu having options for operating systems, drivers stored in the remote disk and other options, and it may allow the user to select needed software.

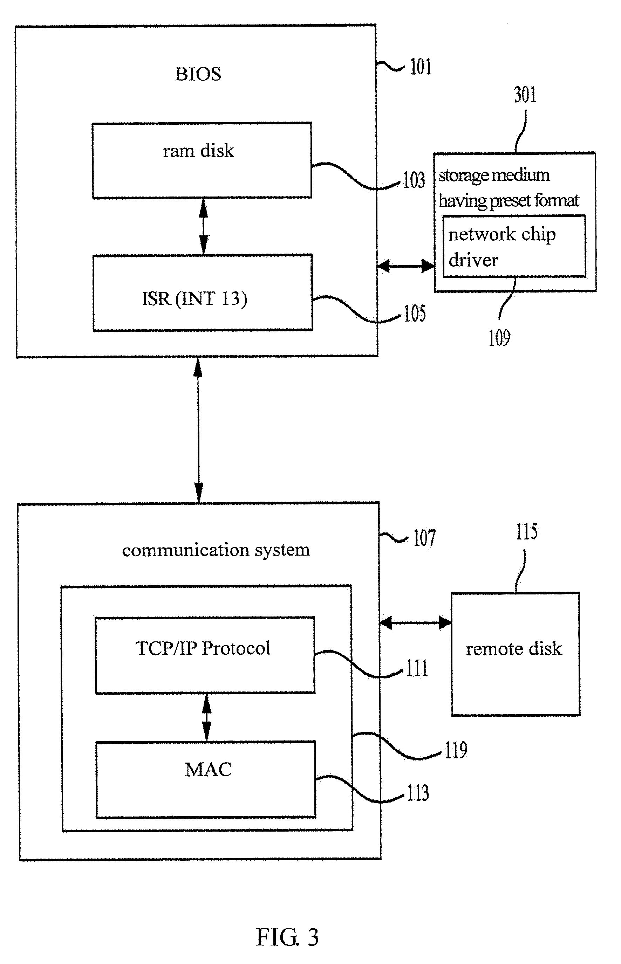

FIG. 3 is a schematic diagram showing the computer in still another embodiment of the invention. As shown in FIG. 3, the computer system in the embodiment is similar with the computer in FIG. 1, but the network chip driver of the computer is stored in an outside storage medium having a preset format 301 rather than in the storage medium having the preset format inside the communication system 107. The outside storage medium having the preset format 301 such as a flash memory is formatted to have a file format accessible by the BIOS 101. For example, it is formatted to have a file format such as NTDS, FAT32 or FAT. The BIOS 101 may read the network chip driver from the outside storage medium having the preset format 301.

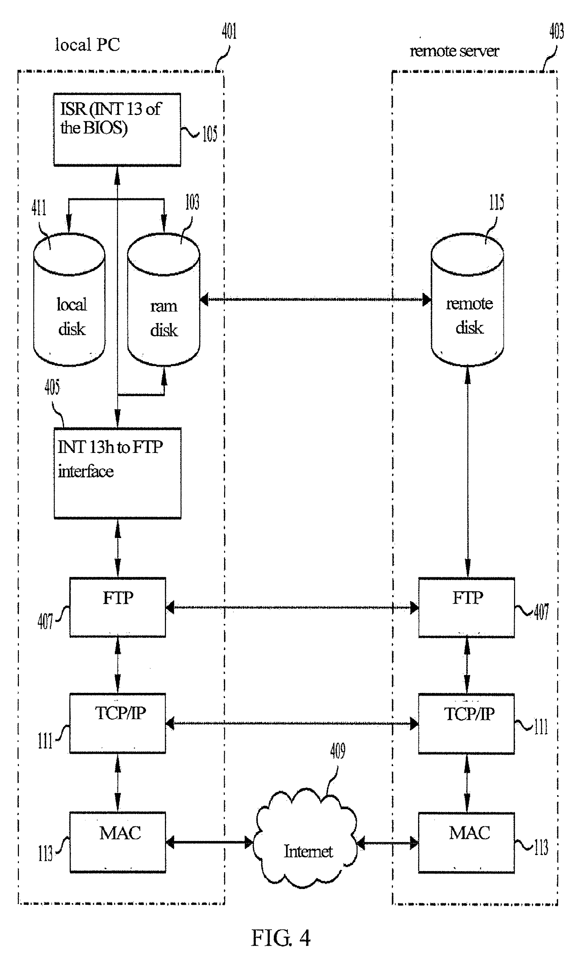

FIG. 4 is a block diagram showing the computer system in an embodiment of the invention. The computer system in the embodiment includes a local personal computer (PC) 401 and a remote server 403. Commands and data are transmitted via the Internet 409 between the local PC 401 and the remote server 403.

The local PC 401 includes an ISR 105 (the INT 13 of the BIOS), a local disk 411, a ram disk 103, an INT 13h to FTP interface 405, a FTP module 407, the TCP/IP module 111 and the MAC module 113.

The INT 13h to FTP interface 405 may convert the function performed by the ISR 105 to the corresponding function of the FTP module 407, and the data and commands are converted therein. When the interface 405 finishes converting the functions of the ISR 105 to the functions of the FTP module 407, the converted commands or data are uploaded to the Internet 409 by a standard communication flow path (including the FTP module 407, the TCP/IP module 111 and MAC module 113), and they are transmitted to the remote server 403 through the Internet.

The remote server 403 includes the remote disk 115, the FTP module 407, the TCP/IP module 111 and the MAC module 113. The standard communication flow path of the remote server 403 (including the FTP module 407, TCP/IP protocol module 111 and MAC module 113) converts the data and commands uploaded from the local PC 401 to the Internet 409 to the mode identifiable by the remote disk 115 to access the remote disk.

**Chart 1**

| INT number | input register value | ISR Function Name | corresponding FTP Function name |
|---|---|---|---|
| INT 13 | AH=0x09 | initialize the controller by a driving parameter | open connection |
| | AH = 02h AL = nonzero value ES:BX -> data buffer | read data in sector of the disk to the memory | a retrieve the file from the remote and list the file names in the menu |

Chart 1 lists the corresponding relation of the ISR functions and the FTP module functions. As shown in chart 1, when the AH column of the register is 0x09, the ISR initializes the controller using a driving parameter. The corresponding function performed by the FTP module is opening connection. When the AH column is 02h, the ISR retrieves data in a certain sector in the disk to the memory, and the FTP module retrieves the file from the remote and list the file names in the menu correspondingly. At that moment, the sector number AL which is to be read is a nonzero value, and the ch column of the register is the lower eight bits of the cylinder number, and the cl column of the register is the higher two bits of the cylinder number of the hard disk (the sixth and seventh bits), and the cl column represents the sector number. The DH column of the register represents the head number, the DL represents the driving number, and the ES:BX represents the data buffer.

According to the above embodiment, the network chip driver is stored in the storage medium having the preset format accessible by the BIOS. The user may operate the BIOS to control the network chip driver in the storage medium having the preset format to capture information from the network. Thus, the electronic device may be driven before the computer enters an operating system, and this increases the convenience in accessing the Internet.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A computer **characterized by** comprising:
a basic input/output system (BIOS) (101) including a disk access interface module to access a remote disk (115) through a network, wherein the BIOS (101) creates a ram disk (103) to store shortcut data retrieved from the remote disk (115); and
a communication system (107) including:
a storage medium having a preset format (109), wherein the storage medium having the preset format (109) includes a network chip driver to establish a connection between the computer and the network; and
a communication protocol layer module (119) allowing the computer to communicate with the remote disk (115) via the network chip driver.

2. The computer according to claim 1, **characterized in that** the disk access interface module is an INT 13 interrupt service routine (ISR) (105).

3. The computer according to claim 1, **characterized in that** the shortcut data is a file menu of the remote disk (115).

4. The computer according to claim 1, **characterized in that** the preset format in the storage medium is a FAT file system or a FAT32 file system.

5. The computer according to claim 1, **characterized in that** the network chip driver drives a wired Ethernet or a wireless network.

6. The computer according to claim 1, **characterized in that** the BIOS (101) further comprises a created user interface module (201) for displaying the shortcut data for the user to look up.

7. The computer according to claim 1, **characterized in that** the communication protocol layer module (119) comprises a file transfer protocol (FTP) module (407) to download a driver corresponding to the shortcut data to the computer.

8. The computer according to claim 1, **characterized in that** the BIOS (101) further comprises configuration information to store a user account and a user password for connecting to the network.

9. A method for connecting a computer to a network disk, **characterized by** comprising:
accessing a storage medium having a preset format by a BIOS, wherein the storage medium having the preset format includes a network chip driver;
executing the network chip driver to establish a connection between the computer and a network;
executing a communication protocol layer module to allow the computer to communicate with a remote disk through the network chip driver;
creating a ram disk by the BIOS; and
storing a shortcut data retrieved from the remote disk to the ram disk.

10. The method for connecting the computer to the network disk according to claim 9, further **characterized by** comprising:
creating a user interface module by the BIOS;
displaying the shortcut data on the user interface module; and
executing a FTP module to download a driver corresponding to the shortcut data to the computer.
